# EUROPEAN PATENT SPECIFICATION

(11) **EP 1 666 185 B1**
(45) Date of publication and mention of the grant of the patent: **17.09.2008**
(21) Application number: 05024866.5
(22) Date of filing: 14.11.2005
(51) Int. Cl.: B23K 26/03, B23K 26/04, B23K 26/08, B23K 26/36

(54) **Laser processing machine and method with image acquisition and processing means**
Laser Bearbeitungsvorrichtung und -verfahren mit Bildaufnahme und -verarbeitungsmittel
Dispositif et méthode d'usinage laser avec des moyens d'acquisition et de traitement d'images

(30) Priority: 12.11.2004 JP 2004328642
(43) Date of publication of application: 07.06.2006
(73) Proprietor: HITACHI VIA MECHANICS, Ltd., Ebina-Shi, Kanagawa 243-0488 (JP)
(72) Inventor: Katsuta, Daisuke, imaizumi Ebina-shi Kanagawa 243-0488 (JP); Nomoto, Mineo, imaizumi Ebina-shi Kanagawa 243-0488 (JP); Yoshimura, Kazushi, imaizumi Ebina-shi Kanagawa 243-0488 (JP)
(74) Representative: Beetz & Partner

(56) References cited:
- EP-A- 1 073 321
- US-A- 5 670 067
- US-A1- 2003 178 396
- US-A1- 2003 178 398
- US-A1- 2005 187 651

## Description

The present invention relates to a laser beam machine and a laser machining method according to the preamble of, respectively, claims 1 and 10 (see, for example, US 2003/178 396, that use laser beam irradiation to machine holes in a large number of to-be-machined objects arrayed on a workpiece rested on the XY table numerically controlled.

For conventional laser beam machines of the numerically controlled type, central coordinate design data of the holes to be machined is written into a machining program and these holes are each irradiated with a laser beam in accordance with the machining program (refer to Japanese Patent Laid-Open No. 2000-343260).

In recent years, the miniaturization of the objects to be machined (hereinafter, referred to simply as machining objects) has been accelerated and a large number of batch-rested machining objects are coming to be machined more frequently than before.

However, since micro-size machining objects are narrow in allowable machining region, critical shifts in machining position may be caused if the central coordinates of the sections to be machined vary, even within machining tolerances, or if the resting positions of the machining objects deviate. Prior to machining, therefore, machining-position corrections using a combination of a CCD camera and image processing or the like are performed to identify machining positions for each machining object. In this case, when the illumination used for viewing/observation is based on the same optical path as that of a laser, if the surface shape of the machining object or the background of the object is in a specular state, regular light reflections can be obtained and the position of the machining object can be clearly identified. If the machining object does not have a specular section, however, the section to be machined has been difficult to correct, because of clear identification being impossible. In addition, for a machining object with directionality, if the direction of resting is undefined, the direction of the machining object itself must be detected, which has made it impossible to identify a machining position from an image just by evenly illuminating the machining object, even when the position of the object is clearly identifiable with regular light reflections.

The document US 2003/178396 discloses a laser machining device for trimming passive circuit elements using a camera which takes an image of the objects to be worked. The objects are directly illuminated by the laser beam. Such an arrangement allows the acquisition of a 2D-image.

The document EP-A-1073321 teaches to provide an additional inspection illumination in order to enhance the accuracy of the detection using the inspection light source rather than detecting only a light signal from the treatment layer generated during the laser processing.

### Summary of the Invention

An object of the present invention is to provide a laser beam machine and a laser machining method that enable, in order to solve the above problems, efficient and highly accurate laser machining of a workpiece with a large number of machining objects arrayed on it, even if the central coordinates of the sections to be machined vary within machining tolerances or the resting positions of the machining objects deviate. The object is solved according to the features of the independent claims. The independent claims relate to advantageous embodiments of the invention.

In order to attain the above object, according to the one aspect of the present invention, there is provided a laser beam machine according to claim 1.

Further there is provided a laser machining method according to claim 10.

In yet another aspect of the present invention, the above laser beam machine and laser machining method further employs a main controller. When the laser machining head executes laser machining, the main controller first splits into multiple machining regions the coordinate data of the multiple machining objects arrayed on the workpiece that becomes the above-mentioned NC data. Next, the main controller provides control so that the XY stage moves between the split machining regions and so that the machining objects within each split machining region are each irradiated with a laser beam deflected on the basis of the above-mentioned deflection control data.

In still another aspect of the present invention, the main controller provides control so that the multiple machining objects within the split machining regions are each irradiated with a laser beam deflected through the shortest path in accordance with multiple sets of above-mentioned deflection control data.

In a further aspect of the present invention, the image processing device is constructed so that position information of each machining object detected includes information on a planar direction of the machining object, existence information on the machining object, and/or defect information on the machining object.

In a further aspect of the present invention, the image processing device is adapted to detect position information of each machining object from the X-direction and Y-direction projection distributions of grayscale level data of each machining object which is created using the image signals acquired from each machining object by the image acquisition head.

In a further aspect of the present invention, the oblique illumination optical system of the image acquisition head is constructed so that an angle of incidence of oblique illumination light for illuminating each of the machining objects ranges from 50° to 70° with respect to a vertical optical axis of the image acquisition head.

According to the present invention, efficient and highly accurate machining of a workpiece on which a large number of machining objects are arrayed can be implemented, even if the central coordinates of the sections to be machined vary within machining tolerances or the resting positions of the machining objects deviate.

The above described features of the invention can be combined in any way as a whole or in part without departing from the scope of the disclosure of the invention as defined in the appended claims.

### Brief Description of the Drawings

Other objects and advantages of the invention will become apparent from the following description of embodiments with reference to the accompanying drawings in which:
FIG. 1 is a plan view showing an example of a workpiece according to the present invention;
FIG. 2 is a configuration diagram that shows an example of a laser beam machine according to the present invention;
FIG. 3 is a flowchart showing an example of operation flow of the laser beam machine according to the present invention;
FIG. 4 is a flowchart showing an example of operation flow of an image acquisition head and image processor used in the present invention;
FIG. 5 is a flowchart showing an example of operation flow of a laser machining head used in the present invention;
FIG. 6 is a configuration diagram showing an example of the image acquisition head and image processor used in the present invention;
FIG. 7 is a diagram illustrating how the image acquisition head in the present invention operates;
FIG. 8 is a schematic diagram that shows image processing by the image processor as to an image acquired by the image acquisition head in the present invention;
FIGS. 9A to 9I are diagrams each showing an example of a machining object whose laser machining position(s) can be detected according to the present invention;
FIG. 10 is a diagram showing the average brightness data obtained from machining objects when the machining objects are each obliquely illuminated using oblique illumination optical system of the present invention; and
FIG. 11 is a flowchart showing an example of creating a machining program for the laser beam machine according to the present invention.

### Detailed Description of the Invention

Embodiments of a laser beam machine and laser machining method according to the present invention will now be described with reference to the accompanying drawings.

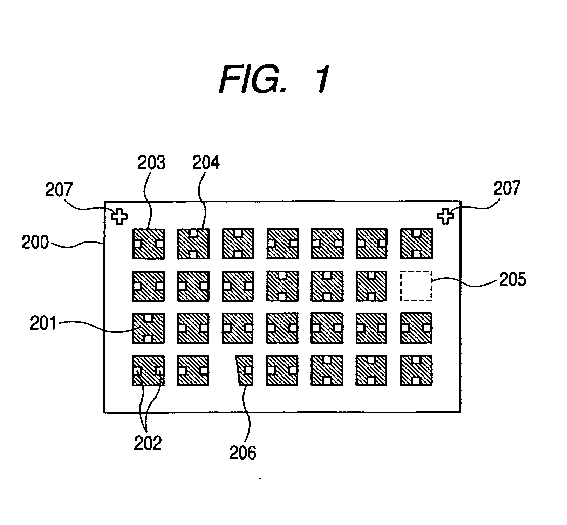

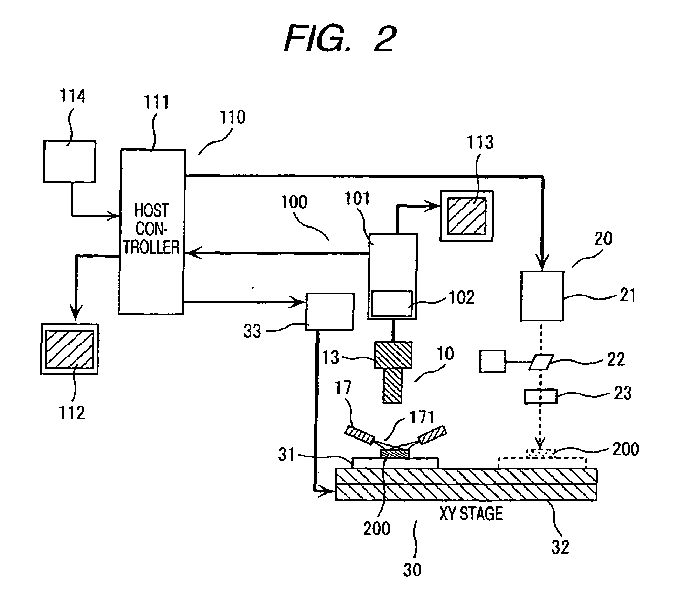

FIG. 1 is a view showing an example of a workpiece to be machined. FIG. 2 is a configuration diagram that shows an example of a laser beam machine having a machining position correction function in the present invention.

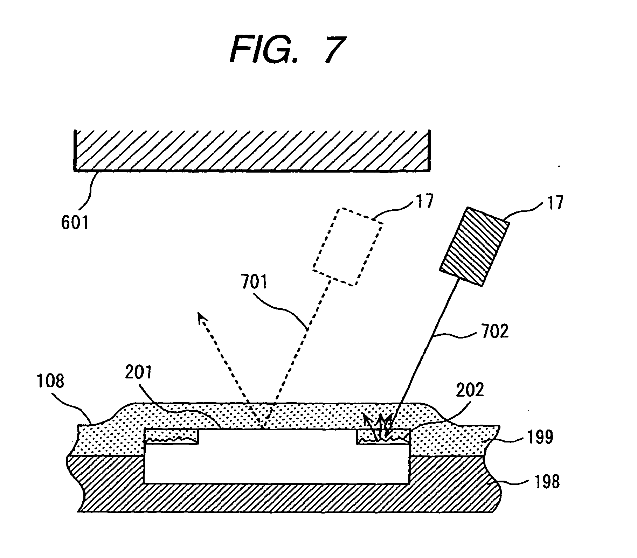

First, the workpiece to be machined is described below using FIGS. 1 and 7. FIG. 1 shows an enlarged plan view of workpiece 200, and FIG. 7 shows a partially enlarged sectional view of the workpiece. A large number of microchip components 201 with a size of, for example, about 1 mm square, are arrayed and rested on the workpiece 200. The microchip components 201 arrayed on the workpiece is secured to the surface of a sheet 198 of polyimide or the like by means of an adhesive or the like, and the sheet is covered with a protective film 199. Holes for taking antenna-installing terminals out from electrodes (pads) of each microchip component 201 need to be provided in the protective film 199. For this reason, the present invention uses a laser beam machine and laser machining method of the invention to machine holes in the protective film as the above-mentioned terminal take-out holes, for example.

After hole machining, a small antenna for use in wireless applications is installed through the holes and then the sheet 198 or the like is cut off for each microchip, whereby an IC chip with an antenna is completed.

As described above, a large number of microchip components 201 with a size of, for example, about 1 mm square, are arrayed on the workpiece 200. Laser machining is conducted on a machining region 202 of the transparent protective film 199 formed over two electrodes (pads) of each microchip component 201. The surface conditions of the electrodes as backing materials for the machining regions 202 of the transparent protective film 199 have a non-specular and stepped surface. When oblique illumination light 171 is emitted from paired oblique illumination optical system 17, therefore, the light scattered and reflected from the surfaces of the electrodes enters an objective lens and reaches a line sensor 13 to enable acquisition of a bright image. The chip component 201 is rested with its machining region oriented in a horizontal direction or in a vertical direction. The chip component when rested as in the former case is denoted as 203, and the chip component when rested as in the latter case is denoted as 204. When laser machining is conducted, therefore, the horizontal or vertical direction must be detected. In addition, the chip component 201 may be absent as denoted by 205 or may be defective as denoted by 206. In these cases, since laser machining is not conducted, whether the chip component is absent or defective also needs to be recognized.

The surface of the workpiece 200 is printed or inscribed with, for example, a crisscross reference mark (alignment mark) 200 at corners. Positions of the reference marks 207 on the workpiece 200 are known through design data or others. Detecting the positions of the reference marks 207 initially from an image acquired at the line sensor 13, therefore, enables a total position of the chip component 201 in the image to be approximately detected from the design data. Accordingly, detection ranges of individual chip components 201 can be identified and this makes chip detection easy. Even if the reference marks 207 are not present, total positions of each chip component 201 can likewise be detected from the design data by, for example, scanning input images in order of image input and detecting the first row or first line of the chip components 201.

Application of the laser beam machine and laser machining method according to the present invention is not limited to the above-described workpiece 200.

A configuration, as an example, of the laser beam machine that provides the above workpiece with laser machining will now be described using FIG. 2. The laser beam machine according to the present invention includes a stage system 30 that moves a workpiece 200 rested thereon. This laser beam machine also includes an image acquisition head 10 intended only for image acquisition, and the image acquisition head 10 acquires images of machining positions 202 arrayed on the workpiece 200. As shown in FIGS. 2 and 7, a large number of microchip components 201 arrayed on the workpiece 200 in accordance with reference positions of reference marks 207 or the like are secured to an upper face of a sheet 198 of polyimide or the like and each have a surface covered with a transparent protective film 199. The machining positions 202 are equivalent to electrodes formed in pairs in each microchip component 201. According to the present invention, the laser beam machine includes an image processor 100 intended only for image processing. On the basis of images acquired by the image acquisition head 10 with a first optical axis as a standard position (a reference), the image processor 100 calculates deflection control data (the machining positions and other information) with a second optical axis as a standard position (a reference). Furthermore, the laser beam machine includes a laser machining head 20 as a machining-only unit to provide laser machining based on the deflection control data (the machining positions and other information) calculated by the image processor 100 with the second optical axis as the standard position. Besides, the laser beam machine includes a main control system 110 that controls the entire machine. In particular, in the laser beam machine of the present invention, since a large number of machining positions are arrayed on the workpiece 200, the image acquisition head 10 only for continuously acquiring images and the laser machining head 20 only for continuously laser machining are arranged by spacing at required intervals. A position at which the image acquisition head 10 is provided is termed an image acquisition station, and a position of the laser machining head is termed a laser machining station. The stage system 30 is adapted to be usable both for the image acquisition head 10 to image the large number of machining positions and for the laser machining head 20 to provide these machining positions with laser machining. However, an independent stage system 30 may be constructed for the image acquisition head 10 and the laser machining head 20 each, in which case, alignment detection optical system (not shown) that acquires images of and detects the reference positions of the reference marks 207 (or the like) formed on the workpiece 200 becomes necessary for the laser machining head 20.

The stage system 30 includes sections such as an XY stage 32 which moves in an XY direction with a vacuum-attraction table 31 mounted on the stage 32 to vacuum-attract and rest the workpiece 200 thereon, and a stage controller 33 for numerical control of the XY stage 32. The XY stage 32 has a displacement detector, such as a linear scale, that detects the amount of displacement (travel distance) of the XY stage 32 to provide numerical control thereof.

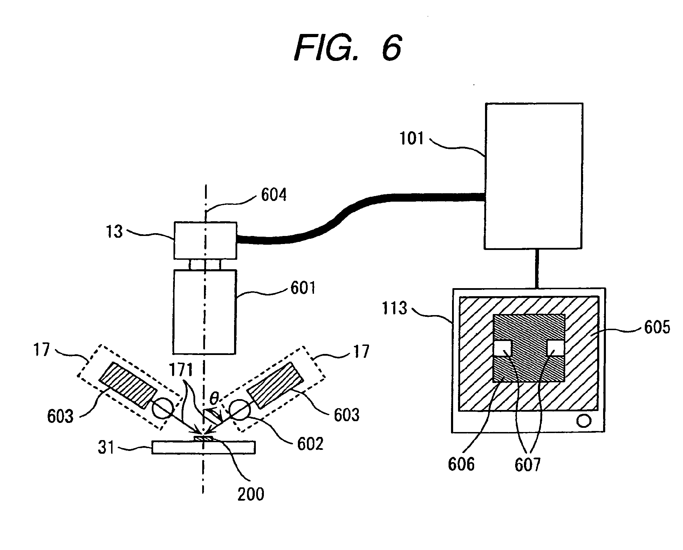

The image acquisition head (image acquisition microscopic unit) 10 includes paired oblique illumination optical system 17 and an objective lens 601 (shown in FIG. 6) that converges light which is scattered and reflected from the machining positions (electrodes) 202. The image acquisition head (image acquisition microscopic unit) 10 also includes an image-forming lens (not shown) to convert into image form the scattered and reflected light that has been converged by the objective lens 601, and image acquisition optical system (image acquisition microscope) having a line sensor 13 constituted by devices such as a CCD sensor which receives the scattered and reflected light converted into image form. The line sensor 13 is installed at an image acquisition position acquiring a image of a region on the workpiece 200 which is illuminated linearly (in strip-like form) with oblique illumination light 171 by the oblique illumination optical system 17 using, for example, halogen light as a light source. The oblique illumination light 171 is emitted at such an angle that sections to be machined, on the workpiece 200, can be illuminated clearly and sharply with the most desirable contrast.

The laser machining head 20 specially designed for machining has a laser oscillator 21 to emit laser beams. The laser machining head 20 also includes an XY galvanomirror (XY optical beam deflector) 22 by which, on the basis of machining position correction data (deflection control data), the beams that have been emitted from the laser oscillator 21 are deflected in an XY direction with an optical axis as a center. Additionally, the laser machining head 20 includes an fθ lens (irradiation lens) 23 by which the laser beams that have been deflected in the XY direction by the XY galvanomirror 22 are converged, then further deflected, and admitted into machining positions vertically.

The image processor 100 includes an image processing controller 101 and an image monitor 113. The image processing controller 101 has an image input board 102 to receive (acquire) an image signal acquired images by using the line sensor 13 based on the optical axis (the first optical axis) of the image acquisition head 10 as the standard position, and executes image processing based on the second optical axis (the optical axis of the laser machining head 20). The received image signal is used during image processing to calculate deflection control data, inclusive of information on machining positions based on the optical axis (the second optical axis) of the laser machining head 20. The machining position information is based on central coordinates of split machining regions and includes machining position correction data for the design data, or NC data, that includes a distance between the optical axes, in particular. The image monitor 113 is connected to the image processing controller 101 and displays image processing results and other data. The image processing controller 101 receives (acquires) image information from the line sensor 13 via the image input board 102 and conducts image processing. Detection results by the image processing controller 101 are transferred to a host controller 111, where the detection results are then processed as the information used during laser machining. For example, the detection results are used to correct NC data that includes machining position data. Laser machining is not conducted if the detection results indicate that machining objects do not exist or that a particular machining object has a surface defect(s). Furthermore, information on these machining objects may be supplied to a before processing step or a next processing step of laser machining and used to improve production lines in efficiency.

The main control system 110 has the host controller 111 that contains XY stage control NC data based on design data. Also, the host controller 111 generates NC laser machining data in accordance with a laser machining program on the basis of the above-mentioned machining position information obtained from the image processing controller 101. Additionally, the host controller 111 controls the stage controller 33, subject to internal NC data of the above-generated NC laser machining data. Furthermore, the host controller 111 provides on/off control of the laser oscillator 21 of the laser machining head 20. Besides, the host controller 111 controls the amount of XY deflection of the XY optical beam deflector 22, subject to the machining position correction data (deflection control data) contained in the NC laser machining data. The main control system 110 also includes a host monitor 112 that displays information on movements and other factors of the entire laser beam machine. In addition, the main control system 110 includes an NC data input device 114 (for example, a CAD system) that acquires design data, such as CAD data, of the workpiece 200, that is, design position coordinates of typical points on each chip component 201 arrayed on the workpiece 200. More specifically, the design data includes, for example, data on chip components arrayal pitches in X-and Y-directions, geometrical (shape and size) data of each chip component 201, and position data of the electrodes on each chip component 201. Furthermore, the main control system 110 includes an input device (not shown) that acquires.(receives), for example, an image processing program using the image acquisition head 10, and an NC laser machining program for controlling the laser machining head 20.

Connecting multiple image-processing controllers 101 to the host controller 111 enables it to process images inputted from the line sensors of multiple image acquisition heads.

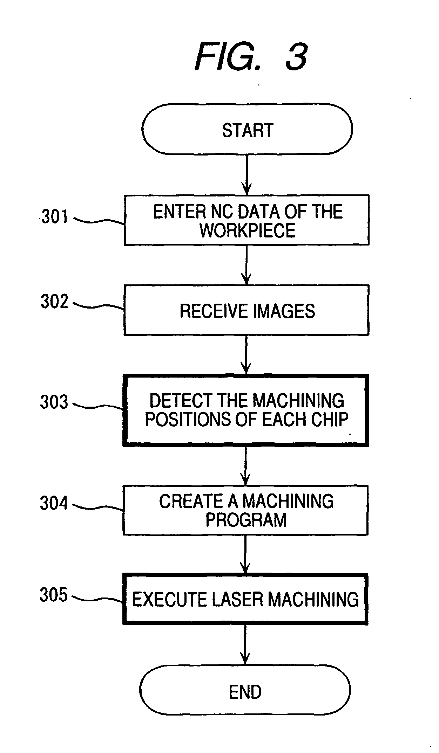

Next, total operation flow of the laser beam machine shown in FIG. 2 will be described using FIG. 3.

Step 301: Based on design data, NC data that expresses, for example, the central position coordinates of the chip component 201 arrayed in large numbers on the workpiece 200 (i.e., arrayal information of each chip component) is input from the NC data input device 114, for example, a CAD system, to the host controller 111. As mentioned above, the design data includes the position coordinates of typical points on each chip component 201 arrayed on the workpiece 200 (i.e., data inclusive of chip components pitches and other arrayal information), geometrical data of each chip component 201, and position data of the electrodes on each chip component 201. Therefore, for example, the central position coordinates of each chip component 201 can also be calculated from position coordinates of typical points (corners) of each chip component 201 arrayed on the workpiece 200. As a result, NC data for XY stage control, based on the design data and other data of the workpiece, is incorporated into the host controller 111.

Step 302: At the image acquisition station, first, the reference positions, such as reference marks 207, that are formed on the workpiece 200 are detected by acquisition of images of the reference positions. Next, the XY stage 32 is controlled from the host controller 111 via the stage controller 33 in accordance with the above-mentioned NC data based on the chip components arrayal information from the reference positions. Thus, each microchip component 201 is positioned within an image acquisition field-of-view of the image acquisition head 10. At this time, the XY stage 32 travels, for example, in the Y-direction in a stepwise fashion, and in the X-direction linearly in a reciprocating fashion, within a dimensional range parallel to a longer side of the line sensor 13. This enables the line sensor 13 to acquire images of all chip components 201 arrayed on the workpiece 200. The image-processing controller 101 controls the line sensor 13 and receives the images of the chip components 201.

Step 303: During image processing, the image-processing controller 101 can use received images to detect or calculate not only directions and presence/absence of and defects in all chip components 201, but also the machining positions 202 (machining position correction data with respect to design data) indicated by the electrodes. The image-processing controller 101 itself does not control the XY stage 32, so even during operation of the XY stage, the image-processing controller 101 can receive and process images. As a whole, therefore, laser machining efficiency can be enhanced.

Step 304: The host controller 111 receives, from the image-processing controller 101, machining position data of all chip components 201 arrayed on the workpiece 200, that is, direction, existence, and defect data of each chip component 201 and the machining position correction data for design data (design position coordinate data of typical points, for example, central points, of each chip component). Thus, the host controller 111 creates a laser machining program designed so that where a machining object is absent, machining is skipped, and so that where a machining object is present, a positional shift thereof is incorporated, by correcting the machining position data described in the NC data that is added the inter-optical-axis distance data to the above-mentioned design data based on the above-mentioned machining position correction data. When the laser machining program is created, the inter-optical-axis distance between the optical axis 604 of the image acquisition head 10 and the optical axis of the laser machining head 20 is known if periodically measured in advance, so the distance between the optical axes can be added to the NC data. On each chip component 201, therefore, the optical axis of the image acquisition head can be positioned with respect to that of the laser machining head 20 by moving the XY stage 32.

Step 305: The host controller 111 controls the XY stage 32 via the stage controller 33 in accordance with the NC data that is the inter-optical-axis distance data with the design data added thereto. Thus, the central coordinates of split machining regions (chip components arrangement regions) determined by a size of the fθ lens (irradiation lens) 23 that defines a machining range for deflecting laser beams under control of the XY optical beam deflector 22 are sequentially established at positions of the optical axis of the laser machining head 20. Additionally, the host controller 111 controls the XY optical beam deflector 22, pursuant to the machining position data (deflection control data) that has been corrected by using relative typical-point position coordinates of each chip component for the central coordinates of each split machining region. Accordingly, laser beam irradiation positions deflect and are corrected very accurately, and hole machining is conducted for the protective film over the two electrodes (i.e., the two machining positions 202) of each chip component 201.

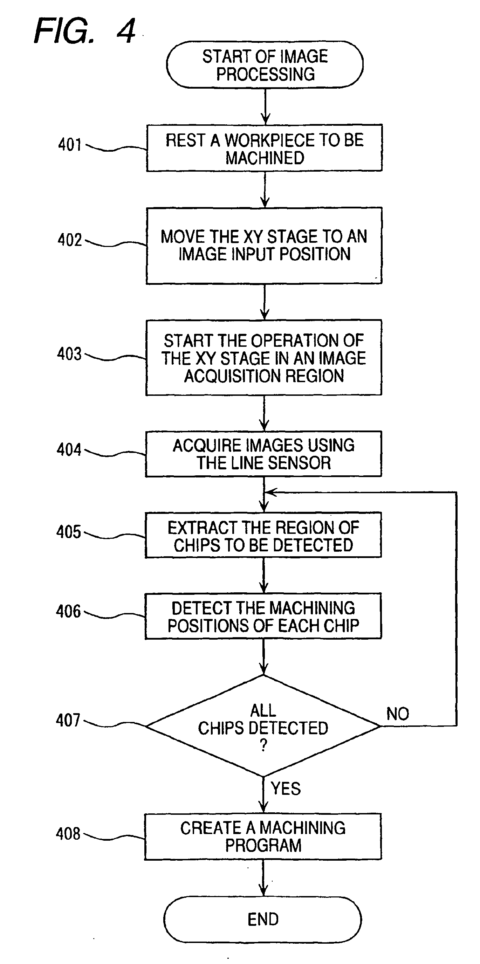

Next, detailed operation flow of the image processor 100 will be described using FIG. 4.

Step 401: A workpiece to be machined is rested. Workpiece 200 is rested on the vacuum-attraction table 31 of the XY stage 32. The workpiece 200 is secured by the vacuum-attraction table 31 and is not deviated by the movement of the XY stage 32. Commands are issued from the host controller 111.

Step 402: The XY stage 32 is moved to an image input position. The host controller 111 controls the XY stage 32 and moves each chip component 201 arrayed on the workpiece 200 to an image acquisition position present directly under the line sensor 13.

Step 403: XY stage operation in an image acquisition region is started. The host controller 111 controls the operation of the XY stage 32 on the basis of NC data so that images of all chip components 201 on the workpiece 200 can be input.

Step 404: The line sensor acquires input images. The image-processing controller 101 starts to acquire images once the workpiece 200 has come into a viewing field of the line sensor 13. Acquired images are stored from the image input board 102 into an internal image storage device (not shown) of the controller 101. Although the present embodiment uses the line sensor 13 as an image acquisition device, the line sensor 13 may be replaced with a TV camera or any other appropriate area camera to simultaneously acquire input images of the multiple chip components on the workpiece 200.

Step 405: The region of chips to be detected is extracted. The chip components 201 are image-processed, one at a time, as a pre-step of chip machining position detection. At the same time the image-processing controller 101 starts to acquire input images, the controller 101 sequentially extracts images of each chip component 201 in order of image input.

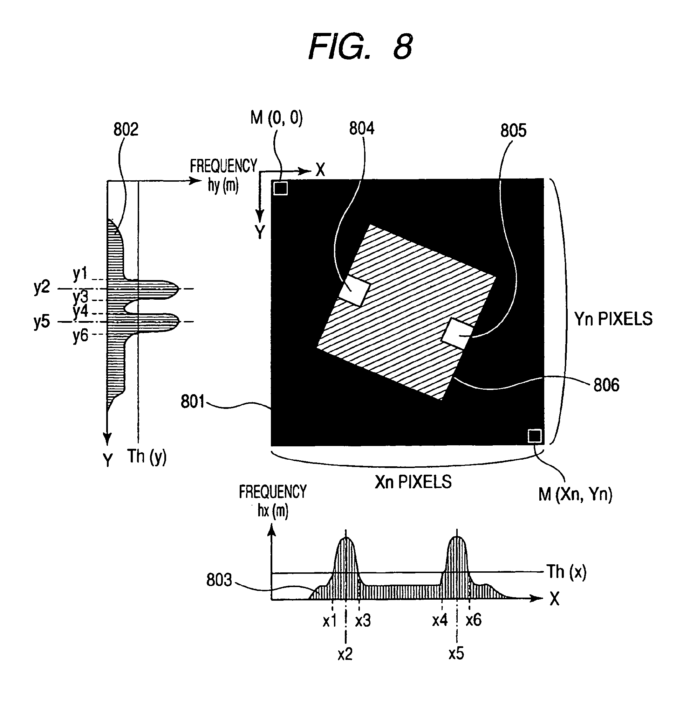

Step 406: Chip-machining positions are detected. The image-processing controller 101 extracts each chip component 201 from images, discriminates the presence/absence and direction of the chip component 201 and whether the chip component 201 is defective, and detects the machining positions 202 thereof. Examples of detailed processing will be later described using FIG. 8.

Step 407: Images of all chip components 201 arrayed on the workpiece 200 are input and when the detection of the machining positions is completed, the input of the images is terminated and a next step follows.

Step 408: A machining program is created. The host controller 111 receives, from the image-processing controller 101, not only information on the direction and presence/absence of and defects in the chip component 201 that were detected in step 406, but also machining position information. The machining position information refers to positional shifts at (machining position correction data associated with) the multiple machining positions 202 with respect to central coordinates of splittable regions for each split machining region (the arrayal region of the multiple chip components 201, determined by the size of the fθ lens 23) with respect to the optical axis of the laser machining head 20. If the chip component 201 is missing or defective, machining information on that chip component is deleted from NC data so that laser machining is not conducted. When the chip component 201 is present and nondefective, the direction of the chip component and the machining position data thereof are examined and for example, the accurate design machining positions from individual split machining regions' central coordinates that incorporate data such as the shift in the position of the chip component 201 are, as machining position correction data, added to or subtracted from the NC data. The machining position correction data (deflection control data) is used to control the XY optical beam deflector 22 of the laser machining head 20, and does not always need to be added to or subtracted from the NC data used to control the XY stage 32.

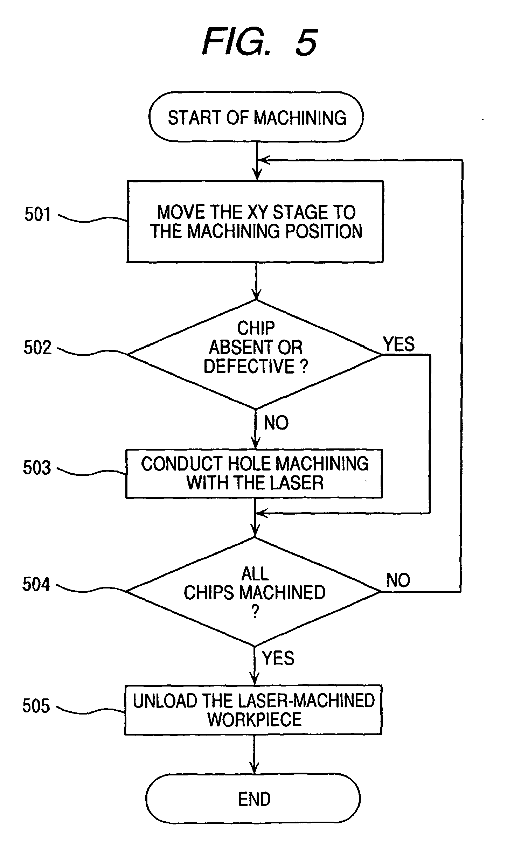

Next, detailed operation flow of the laser machining head 20 will be described using FIG. 5.

Step 501: The XY stage is moved to the machining position. The host controller 111 moves the XY stage 32, subject to the NC data, and establishes, at positions on the optical axis of the laser machining head 20, the central coordinates of each split machining region on the workpiece, predetermined by the control of the XY optical beam deflector 22.

Step 502: It is discriminated whether the chip is absent or defective. If, in the machining program created in the step 408, the chip component 201 is missing or has, for example, nicks in it, since the chip is defective, step 503, or hole machining, is skipped and control progresses to step 505. During the discrimination step, for example, if the chip component 201 not to be machined is properly marked in color ink, this defective chip component can also be discriminated in subsequent steps.

Step 503: Hole machining. This step is conducted if, in the machining program, the chip component 201 is present and nondefective. The host controller 111 conducts ON control of the laser oscillator 21, emits a laser beam, and controls the XY optical beam deflector 22 on the basis of the machining position correction data of each machining region from the central coordinates of the split machining region. Thus, the above-emitted machining laser beam is converged on the two machining regions (electrodes) 202 of the chip component 201 and these machining regions 202 are irradiated for hole machining.

Step 504: It is discriminated whether machining has been completed. Control progresses to step 505 if holes have been machined in the machining regions 202 of all chip components 201 arrayed on the workpiece 200, except for defective chips. If hole machining is not completed, control is returned to step 501, in which a next chip component 201 is then selected for hole-machining.

Step 505: The laser-machined workpiece is unloaded. Laser machining of the current workpiece 200 is completed and the workpiece 200 is unloaded for a next process. At this time, either the machining position information from the image-processing controller 101 or the machining program can be output together with the laser-machined workpiece to a next process site, and machining information can be appended to the workpiece 200.

As described above, shifts in the arrayal positions of the chip components 201 arrayed in large numbers on the workpiece 200, and variations in the positions of the machining objects of each chip component 201, even within machining tolerances, can be corrected at high speed by measuring the machining object positions on the workpiece 200 before starting laser machining. Rapid and accurate laser machining can be consequently performed on a large number of machining objects.

Next, an example of an image acquisition head 10 which is the image input section according to the present invention will be described using FIGS. 6, 7, and 10. In this embodiment, when the surface of each chip component has the specular state and the surface of the electrode being background in the machining region 202 has the non-specular state, it explains as follows. That is to say, as shown in FIG. 6, an objective lens 601 is connected to a line sensor 13. The objective lens 601 is selected in consideration of the magnification and detection field of view that satisfy laser machining accuracy, and of a distance to a workpiece 200. During the selection of the objective lens 601, the magnification is set so that, for example, when laser machining can be effected with an accuracy of 1 µm, the line sensor 13 will also have the same accuracy of 1 µm/pixel. Oblique illumination optical system 17 is constituted by an optical fiber 603 which irradiates linear light, and a converging lens 602 which converges the light from the optical fiber 603. The oblique illumination optical system 17 is positioned for an angle of incidence, θ, with respect to a vertical optical axis 604 of the line sensor 13 from two directions. Acquired images can be confirmed on a monitor 113. The monitor 113 is connected to an image-processing controller 101, and prior to display, image data from the line sensor 13 is converted into a format that enables the image data to be displayed on the monitor via the image-processing controller 101. Setting the angle of incidence, θ, of oblique illumination light 171 from two directions to the value best suited for the workpiece yields a high-contrast image with a significant difference in luminance, that is, an image in which machining regions 607 are brighter than a chip component 606 and a background 605. Thus, high detection accuracy can be easily obtained during image processing intended to detect machining positions.

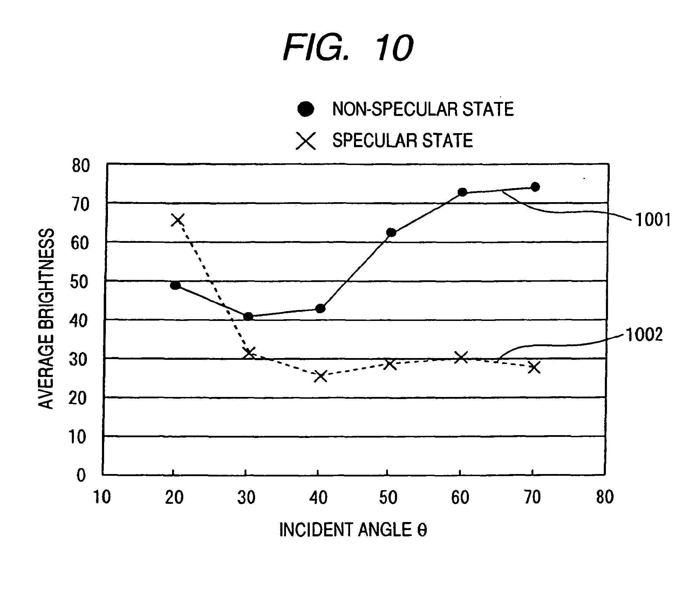

The reasons why the high-contrast image is obtained will now be described using FIGS. 7 and 10. Each chip component 201 arrayed on the workpiece 200 has a specular surface. Accordingly, light 701 from the oblique illumination optical system 17 regularly reflects and does not enter the objective lens 601 located almost directly above. This makes the chip component 201 dark in an image 605 displayed on the monitor 113. Backing surfaces of machining regions 202, however, are formed as electrodes (pads), and since these surfaces are non-specular and have very small irregularities, light 702 from the oblique illumination optical system 17 diffusedly reflects from the backing surfaces of the machining regions 202 and a portion of the light 702 enters the objective lens 601. A greater amount of light incident on the objective lens 601 makes the machining regions 607 brighter in the image 605. FIG. 10 is a graph that shows brightness data of the images obtained by oblique illumination of non-specular and substantially specular workpieces (chip components 201) according to the present invention. This graph shows the input images that were obtained by oblique illumination with an angle of incidence, θ, set in increments of 10° in a range of 20°-70°. Changes in the angle of incidence, θ, of the oblique illumination are plotted on a horizontal axis, and changes in average brightness values in the same region of various incident-angle images are plotted on a vertical axis. Although average brightness 1001 of the non-specular workpieces in the graph of FIG. 10 is of the same level for θ values of 20°-40°, the average brightness progressively increases at θ greater than 40°. Conversely, average brightness 1002 of the substantially specular workpieces progressively lowers at θ values of 20°-40° and takes substantially the same level at θ greater than 40°. The graph indicates that since the brightness 1001 of the non-specular workpieces and the brightness 1002 of the substantially specular workpieces significantly differ in a θ region of 50°-70°, non-specular portions and substantially specular portions can be easily discriminated from each other during image processing. The above means that images suitable for the detection of machining positions can be acquired during image processing by assigning a value of 50°-70° as the angle of incidence, θ, of the oblique illumination from two directions. As a result, the position having the largest margins for errors of variation Of machining size and difference of machining position, etc. in laser machining can be set by calculating a central position of a machining region and selecting this central position as a laser machining position.

Next, machining position correction data of a chip component with respect to central position coordinates of machining regions 804, 805, based on design data for central coordinates of a machining region present at an optical-axis position of a laser machining head 20 in the image processor 100 of the present invention, and a specific example of image processing intended to detect information on absence of a chip component or on chip component defects will be described using FIG. 8. A distance between an optical axis of an image acquisition head 10 and that of the laser machining head 20 is known. This means that the central position coordinates of the machining regions 804, 805, based on design data for central coordinates of a split machining region (arrayal region of multiple chip components) present at the optical-axis position of the laser machining head 20 are also known. As will be next described, therefore, it is obvious that the machining position correction data and others of the chip component can be calculated from the chip component missing information or chip component defect information obtained from measurements by image processing with the optical axis of the image acquisition head 10 as a reference, and from the central position coordinates of the machining regions 804, 805.
(1) An image by two-way oblique illumination light 171 is input from a line sensor 13. An input image is formed with arranging a plurality of the chip components as shown in FIG. 1. However, as roughly position of each chip component can be known beforehand as previously mentioned, an image of one chip component 806 is acquired by extracting as each input image 801 from the input image. When an upper left corner of the each input image 801 is defined as a starting position, the extracted image data is stored sequentially from coordinates M (0, 0) to M (Xn, Yn), where Xn is the number of pixels in an X-direction and Yn is the number of pixels in a Y-direction. FIG. 8 shows an example in which a chip component 606 originally to be rested at right angles to and in parallel to XY axes is obliquely rested.
(2) A brightness projection distribution (grayscale level projection distribution) in the X-direction (horizontal) is calculated. Calculation results are obtained as an X-direction projection distribution 803. Projection distribution data "hx (m)" is obtained by adding the image data (brightness grayscale level = 0 to 255) of the input image 801 of FIG. 8 as often as there actually are coordinates of M (m, n) - M (m, n), over an entire "n" number of rows in the Y-direction, where "m" takes any value within a range from 0 to Xn.
   As denoted by reference number 803 in FIG. 8, the X-direction projection distribution assumes a humped pattern since the machining regions 804, 805 are brighter than the surface of the chip component 806. If the chip component 806 is rested at right angles to and in parallel to the XY axes, changes in the brightness of the machining regions 804, 805 take a sharp, convex pattern. However, the chip component 806 in FIG. 8 is obliquely rested, so the machining regions 804, 805 take a humped pattern indicating that the regions 804, 805 were projected brightly in a progressive manner from corners.
(3) It is discriminated whether the chip component is present and defective. If the X-direction projection distribution has an area less than substantially the same area of the chip component, processing is terminated since the chip component is judged to be absent or defective.
(4) Positions x1, x3, x4, x6 are detected from a threshold value "Th (x)". The detection is a step conducted to identify the machining regions 804, 805 of the chip component 806 from the X-direction projection distribution 803. An arbitrary threshold value "Th (x)" is set beforehand. A characteristic quantity of the machining regions 804, 805 is used as "Th (x)". For example, "Th (x)" is half a width of the machining regions 804, 805. Values at the above-mentioned four positions, x1, x3, x4, x6, are equal to or greater than the threshold value "Th (x)". These positions indicate both ends of each of the two machining regions 804, 805, in the X-direction.
(5) A midpoint x2 between positions x1, x3, and a midpoint x5 between positions x4, x6, are calculated. The calculations are a step of calculating an X-direction central position of the machining region 804, 805, from both ends thereof that were detected in step (4). Since x1, x3 indicate both ends of the machining region 804, the midpoint x2 between x1, x3, indicates the X-direction central position of the machining region 804.
   An X-direction central position x5 of the machining region 805 is calculated similarly.
(6) A brightness projection distribution in the Y-direction is also calculated in the same manner as that of the X-direction.
(7) It is discriminated whether the chip component is present and defective. If the Y-direction projection distribution has an area less than substantially the same area of the chip component, processing is terminated since the chip component is judged to be absent or defective.
(8) Positions y1, y3, y4, y6 are detected from a threshold value "Th (y)". End points of the machining regions 804, 805, in the Y-direction, are calculated similarly to the X-direction.
(9) A midpoint y2 between positions y1, y3, and a midpoint y5 between positions y4, y6, are calculated. A central position of the machining regions 804, 805, in the Y-direction, is calculated similar to the X-direction.

As described above, the central positions of the machining regions 804, 805, on the chip component 806 are calculated by execution of steps (1) to (9). These calculations are conducted for all chip components 201 present on the workpiece 200. Also, corrections/modifications are conducted on laser-machining position NC data (especially, the central position coordinates of the machining regions 804, 805, based on the design data for the central coordinates of a machining region present at the optical-axis position of the laser machining head 20). Thus, since the regions of any chip components that have been judged to be missing or defective can be excluded from laser machining, detecting the directions of other nondefective chip components makes it possible to machine holes in the accurate machining regions that have been corrected in various terms such as inclination.

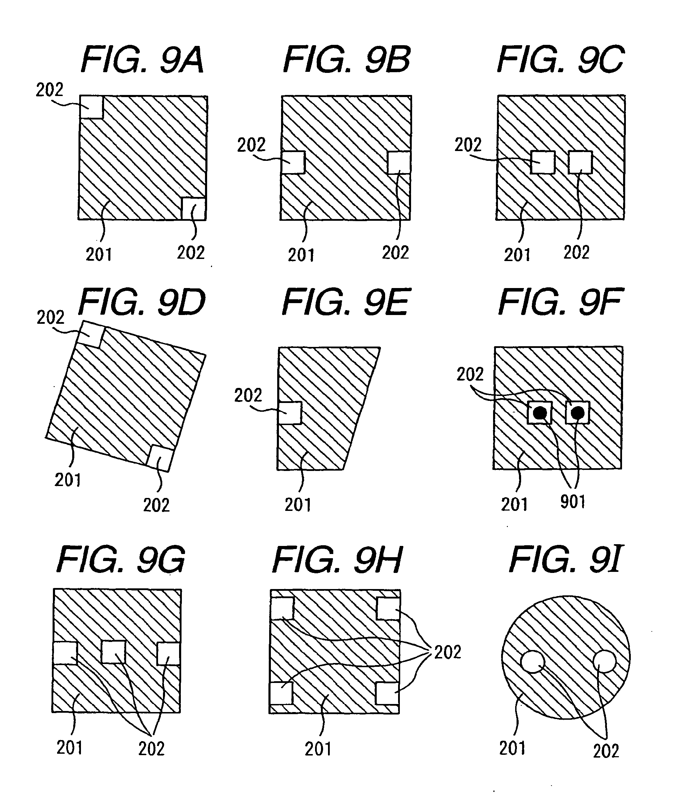

Next, examples of a chip component 201 whose laser machining positions can be detected according to the present invention will be described using FIGS. 9A to 9I. FIG. 9A shows a chip component 201 having a machining region (electrode) 202 disposed at two diagonal corners of four corners. FIG. 9B shows a chip component 201 having the machining region (electrode) 202 disposed at positions two parallel sides of four sides. When, as shown in FIG. 9B, the chip component 201 is rested at right angles to and in parallel to vertical and horizontal directions, both machining regions of the chip component will be the same in terms of vertical central position. If the chip component 201 is obliquely rested, however, the two machining regions will differ in vertical central position. In that case, therefore, a value that enables detection of four points (yl, y3, y4, y6) at both ends of each of the two machining regions is assigned to the Y-direction threshold value "Th (y)" of FIG. 8. Machining regions 202 of the chip component 201 shown in FIG. 9C are disposed centrally on the chip component 201. A resting inclination of the chip component requires processing similar to that of FIG. 9B.

The chip component 201 in FIG. 9A may be mounted obliquely on a workpiece 200. FIG. 9D shows such a state, in which case, the machining regions of the chip component 201 are disposed as shown. The methods of machining region detection in these chip components are as describing per FIGS. 6 to 8. The chip component 201 disposed as in FIG. 9A may become damaged and lose one machining region. Such a state is shown in FIG. 9E. Even if one of the two machining regions is lost as in FIG. 9B, the loss can be detected since, although the X-direction projection distribution pattern obtained will differ from the double-humped pattern in the example of FIG. 8, one hump will remain in the former pattern. The chip component 201 shown in FIG. 9F differs from that of FIG. 9B in that holes 901 are machined. Since an image will be input prior to laser machining, such a chip component will normally not be present. Even if such a chip component is included for whatever reason, however, detection will be possible since the foregoing projection distribution in FIG. 8 will change in humped pattern. For example, when an area of a machining region section in the projection distribution is calculated and compared with an area of a machining region section free of machined holes, if, even with a calculation error taken into consideration, the above former area is smaller than the above latter area, machined holes will be judged to be present in that machining region section.

The chip component 201 shown in FIG. 9G has a machining region 202 in three places, and the chip component 201 shown in FIG. 9H has a machining region 202 in four places. Even for a chip component having two or more machining regions 202, detecting the positions of each of the machining regions during image processing of FIG. 8 makes it possible to detect respective machining positions accurately. As shown in FIG. 9I, if the chip component 201 has a shape other than a square, for example, a circular shape, laser machining positions enable to be detected by processing similar to image processing of FIG. 8.

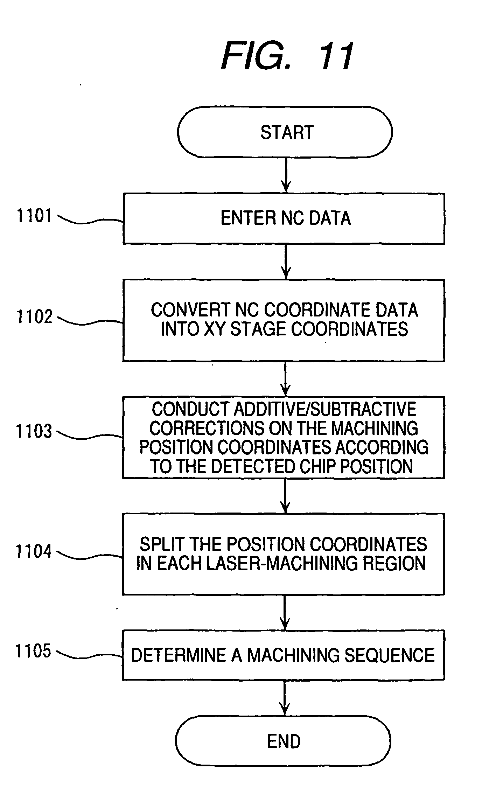

Next, an example of creating a machining program for the laser beam machine according to the present invention will be described using FIG. 11. First, in step 1101, NC data which is described design-data-based arrayal information on each of the chip components arrayed in large numbers on a workpiece 200 to be machined, shape and size data of each chip component 201, and position data of electrodes on each chip component, are input from, for example, a CAD system or any other appropriate NC data input device 114 or the like, to the host controller 111. Other data is also input to the host controller 111 using the input device. The data includes, for example, conditions for image acquisition by the image acquisition head 10 (e.g., an image acquisition magnification, a width of the line sensor 13, and more), machining conditions for the laser machining head 20 (e.g., the sizes of split machining regions, determined by a size of the fθ lens 23), and a distance between the optical axis of the image acquisition head and that of the laser machining head.

Next, in step 1102, the host controller 111 uses the image acquisition head 10 and the image processor 100 to detect reference positions such as the reference marks on the workpiece 200, and converts the position coordinate data of NC data inputted based on the detected reference positions of the workpiece into an XY stage coordinate system for controlling the XY stage 32 of the laser beam machine. In this step, the XY stage 32 needs to be traveled in a different manner, depending on whether image acquisition is to use the image acquisition head 10 or laser machining is to use the laser machining head 20. Therefore, to conduct conversion into an XY stage coordinate system for image acquisition, it is necessary to assign the above image acquisition conditions, and to conduct conversion into the XY stage coordinate system for laser machining, there is a need to assign the above laser-machining conditions and the distance between the optical axes.

In step 1103, XY shifts in positions (inclusive of directions as well) of the each chip component 201 that is detected by the image acquisition head 10, with respect to design data of each chip component, are added to or subtracted from the design-data-based NC data for controlling the XY stage 32. Thus, machining positions are corrected by adding or subtracting the XY shifts with respect to the design-data-based NC data so as to acquire accurate machining position coordinates. At this stage, the machining position coordinates of each chip component with respect to the optical axis need only to have been detected by the image acquisition head 10 and do not always require addition to or subtraction from the NC data.

In step 1104, the position coordinates in the above NC data, specified by design position coordinates based on the reference positions on the workpiece 200, are split for each split machining region whose size is determined by that of the fθ lens 23. Positioning in the central coordinates for each split machining region (the region in which the multiple chip components 201 are arrayed) is conducted by the control of the XY stage 32, based on the above NC data, and control of laser beam irradiation positions (amounts of deflection) within each split machining region is conducted by the XY optical beam deflector 22 of the laser machining head 20 that enables faster control with the XY stage 32. In this way, positioning for each split machining region is conducted by the control of the XY stage 32, while laser beam irradiation positioning in the split machining region is conducted by the control of the XY optical beam deflector 22 of the laser machining head 20. As a whole, therefore, fast machining can be implemented.

Next, in step 1105, a moving path of the laser beam is defined so as to be the shortest between multiple machining positions within each split machining region.

The machining program for the laser beam machine (laser machining head) is created by execution of the above steps. In accordance with the thus-created machining program, the XY stage 32 moves between the large number of split machining regions on the workpiece 200, with respect to the laser machining head 20. Also, in accordance with the moving path of the laser beam that has been defined in the laser machining head 20 so as to be the shortest between the multiple machining positions within each split machining region, and further on the basis of the machining position correction data for each machining position from the detected central coordinates of the split machining region, the XY optical beam deflector 22 is controlled and the laser beam is irradiated from a substantially perpendicular direction through the fθ lens 23 to each machining position. This enables holes to be machined in a protective film.

As described above, according to the present invention, detecting a large number of machining objects arrayed on a workpiece, and positions of these objects, during image processing, makes it possible to discriminate a direction of each machining object in a plane, presence/absence of the machining object, and presence/absence of nicks in and/or defectiveness/nondefectiveness of the machining object. The above detection also makes it possible to detect even a slight shift in the position of each machining object. In addition, a highly reliable, highly efficient laser beam machine and laser machining method free of machining defects and unnecessary laser beam irradiation, can be realized by incorporating discrimination results and detection results into laser machining position data.

While the invention has been described in its preferred embodiments, it is to be understood that the words which have been used are words of description rather than limitation and that changes within the purview of the appended claims may be made without departing from the scope of the invention.

## Claims

1. A laser beam machine, comprising:
an XY stage (32) for resting thereon a workpiece (200) on which a plurality of objects (201) to be machined are arrayed, wherein the XY stage (32) moves the workpiece (200) in an XY direction in accordance with NC data;
an image acquisition station comprising an image acquisition head (10), converting the light into an image signal, and wherein the image acquisition head (10) acquires the image signal from each machining object (201); and
a laser machining head (20) which is provided in a laser machining station disposed next to the image acquisition station, wherein the laser machining head (20) includes a laser light source (21) for emitting a laser beam, an XY optical beam deflector (22) for deflecting a laser beam emitted from the laser light source (21) in the XY direction in accordance with deflection control data obtained from the image-processing means (100), and an irradiation lens (23) for admitting, from a substantially perpendicular direction into each machining object (201), the laser beam deflected by the XY optical beam deflector (22), and wherein the laser machining head (20) irradiates each machining object (201) with the laser beam from the irradiation lens (23) and machines the machining object (201),
**characterized in that** the image acquisition head (10) includes oblique illumination optical system (17) for obliquely illuminating each of the machining objects (201) arrayed on the workpiece (200) moved by the XY stage (32), and detection optical system (601, 13) for receiving the light scattered and reflected from each machining objects (201) obliquely illuminated by the oblique illumination optical system (17), wherein the laser beam machine further comprises
image-processing means (100) which, on the basis of the image signal from each machining object (201) that has been acquired by the image acquisition head (10), detects position information of each machining object (201) with a first optical-axis (604) position of the image acquisition head (10) as a reference, converts the detected position information of each machining object (201) with the first optical-axis (604) position of a reference into position information of each machining object (201) with a second laser-machining optical-axis position as a reference, and obtains deflection control data.

2. The laser beam machine according to claim 1, further comprising a main controller (110) which, when the laser machining head (20) executes laser machining, splits into a plurality of machining regions (202) the coordinate data of the plural machining objects (201) arrayed on the workpiece (200) that becomes the NC data, and conducts control so that the XY stage (32) moves between the split machining regions (202) and so that the machining objects (201) within each split machining region (202) are each irradiated with a laser beam deflected on the basis of the deflection control data.

3. The laser beam machine according to claim 1, further comprising a main controller which, when the laser machining head (20) executes laser machining, splits into a plurality of machining regions (202) the coordinate data of the plural machining objects (201) arrayed on the workpiece (200) that becomes the NC data, and conducts control so that the XY stage (32) moves between the split machining regions (202) and so that the machining objects (201) within each split machining region (202) are each irradiated with a laser beam deflected on the basis of the deflection control data.

4. The laser beam machine according to claim 1 or 2, wherein the main controller (110) conducts control so that the plural machining objects (2019 within each split machining region (202) are each irradiated with a laser beam deflected through the shortest path in accordance with plural sets of the deflection control data.

5. The laser beam machine according to claim 1 or 3, wherein the main controller (110) conducts control so that the plural machining objects (201) within each split machining region (202) are each irradiated with a laser beam deflected through the shortest path in accordance with plural sets of the deflection control data.

6. The laser beam machine according to one of claims 1-5, wherein the image-processing means (100) is constructed so that the position information of each machining object (201) detected includes information on a planar direction of the machining object (201), information on presence/absence thereof, and defect information thereon.

7. The laser beam machine according to one of claims 1-6, wherein the image-processing means (100) is adapted to detect the position information of the each machining object (201) in accordance with the X-direction and Y-direction projection distributions of grayscale level data of the each machining object (201) which are created based on the image signal of the each machining object acquired by the image acquisition head (10).

8. The laser beam machine according to one of claims 4-7, wherein the oblique illumination optical system (17) of the image acquisition head (10) is constructed so that an angle of incidence (Θ) of oblique illumination light (171) for illuminating each of the machining objects (201) ranges from 50° to 70° with respect to a vertical optical axis (604) of the image acquisition head (10).

9. The laser beam machine according to one of claims 1-7, wherein the oblique illumination optical system (17) of the image acquisition head (10) is constructed so that an angle of incidence (Θ) of oblique illumination light (171) for illuminating each of the machining objects (201) ranges from 50° to 70° with respect to a vertical optical axis (604) of the image acquisition head (10).

10. A laser machining method, comprising:
an image acquisition step includes a moving step of moving, in XY directions in accordance with NC data, an XY stage (32) for resting thereon a workpiece (200) in which a plurality of objects (201) to be machined are arrayed, an illuminating step of illuminating to each of the machining objects (201) arrayed on the moving workpiece (200) by an illumination optical system (17), and a receiving and converting step of receiving light scattered and reflected from the illuminated machining object (201) and converting the light into an image signal form to thereby acquire image signals from each of machining objects (201) on the workpiece (200) by a detection optical system in an image acquisition head (10) which is provided in an image acquisition station; and
a laser machining step includes a moving step of moving, in XY directions in accordance with NC data, an XY stage (32) with the workpiece (200) rested thereon, a deflecting step of deflecting a laser beam emitted from a laser light source (21), in the XY directions via an XY optical beam deflector (22), in accordance with deflection control data obtained in the image acquisition step, and an admitting step of admitting the deflected laser beam into each machining object (201) arrayed on the moving workpiece (200) from a substantially perpendicular direction via an irradiation lens (23) to thereby machine each machining object (201) in the laser machining head (20) which is provided in a laser machining station disposed next to the image acquisition station,
**characterized in that** the illumination stop is achieved by illuminating obliquely the machined objects (201) by an oblique illuminating optical system (87) and by the further step of
an image-processing step including a detecting step of, in accordance with the image signals from each machining object (201) acquired in the image acquisition step, detecting position information of each machining object (201) with a first optical-axis (604) position of the image acquisition head (10) as a reference, and a converting step of converting the detected position information of each machining object (201) with the first optical-axis (604) position as a reference into position information of each machining object (201) with a second optical-axis position of a laser machining head (20) as a reference to thereby obtain deflection control data.

11. The laser machining method according to claim 10, wherein the laser machining step further includes a control step in which the coordinate data of the plural machining objects (201) arrayed on the workpiece (200) that becomes the NC data is split into a plurality of machining regions (202) and control is conducted so that the XY stage (32) moves between the split machining regions (202) and so that the machining objects (201) within each split machining region (202) are each irradiated with a laser beam deflected on the basis of the deflection control data.

12. The laser machining method according to claim 10, wherein the laser machining step further includes a control step in which the coordinate data of the plural machining objects (201) arrayed on the workpiece (200) that becomes the NC data is split into a plurality of machining regions (202) and control is conducted so that the XY stage (32) moves between the split machining regions (202) and so that the machining objects (201) within each split machining region (202) are each irradiated with a laser beam deflected on the basis of the deflection control data.

13. The laser machining method according to claim 10 or 11, wherein the control step includes a shortest-path control step of conducting control so that the plural machining objects (201) within each split machining region (202) are each irradiated with a laser beam deflected through shortest path in accordance with plural sets of the deflection control data.

14. The laser machining method according to claim 11 or 12, wherein the control step includes a shortest-path control step of conducting control so that the plural machining objects (201) within each split machining region (202) are each irradiated with a laser beam deflected through shortest path in accordance with plural sets of the deflection control data.

15. The laser machining method according to one of claims 10-14, wherein, in the image-processing step, the position information of the machining objects (201) detected includes information on a planar direction of each machining object, information on presence/absence thereof, and defect information thereon.

16. The laser machining method according to one of claims 10-15, wherein, in the image-processing step, the position information of each machining object (201) is detected in accordance with X-direction and Y-direction projection distributions of grayscale level data of each machining object (201) which is created from the machining object image signal acquired in the image acquisition step.

17. The laser machining method according to one of claims 11-16, wherein, during oblique illumination in the image-processing step an angle (Θ) of incidence of oblique illumination light (171) for illuminating each of the machining objects (201) ranges from 50° to 70° with respect to a vertical optical axis (604).

18. The laser machining method according to one of claims 10-16, wherein, during oblique illumination in the image-processing step, an angle (Θ) of incidence of oblique illumination light (171) for illuminating each of the machining objects (201) ranges from 50° to 70° with respect to a vertical optical axis (604).

## Patentansprüche

1. Laserstrahlmaschine, die umfasst:
eine XY-Bühne (32), auf der ein Werkstück (200) liegen kann, an dem mehrere zu bearbeitende Objekte (201) angeordnet sind, wobei die XY-Bühne (32) das Werkstück (200) in einer XY-Richtung in Übereinstimmung mit Daten zur numerischen Steuerung (NC-Daten) bewegt;
eine Bilderfassungsstation, die einen Bilderfassungskopf (10) enthält, der das Licht in ein Bildsignal umsetzt, wobei der Bilderfassungskopf (10) das Bildsignal von jedem zu bearbeitenden Objekt (210) erfasst; und
einen Laserbearbeitungskopf (20), der in einer Laserbearbeitungsstation vorgesehen ist, die benachbart zu der Bilderfassungsstation angeordnet ist, wobei der Laserbearbeitungskopf (20) eine Laserlichtquelle (21) zum Aussenden eines Laserstrahls, eine XY-Lichtstrahlablenkeinrichtung (22) zum Ablenken eines von der Laserlichtquelle (21) ausgesendeten Laserstrahls in XY-Richtung in Übereinstimmung mit Ablenksteuerdaten, die von den Bildverarbeitungsmitteln (100) erhalten werden, und eine Bestrahlungslinse (23), um den Laserstrahl, der durch die XY-Lichtstrahlablenkeinrichtung (22) abgelenkt wird, aus einer im Wesentlichen senkrechten Richtung auf jedes Bearbeitungsobjekt (201) auftreffen zu lassen, enthält und wobei der Laserbearbeitungskopf (20) jedes Bearbeitungsobjekt (201) mit dem Laserstrahl von der Bestrahlungslinse (23) bestrahlt und das Bearbeitungsobjekt (201) bearbeitet,
**dadurch gekennzeichnet, dass**
der Bilderfassungskopf (10) ein optisches Schrägbeleuchtungssystem (17) enthält, um jedes der Bearbeitungsobjekte (201), die an dem Werkstück (200) angeordnet sind, das durch die XY-Bühne (32) bewegt wird, schräg zu beleuchten, und ein optisches Erfassungssystem (601, 13) enthält, um Licht zu empfangen, das von jedem durch das optische Schrägbeleuchtungssystem (17) schräg beleuchtete Bearbeitungsobjekt (201) gestreut und reflektiert wird, wobei die Laserstrahlmaschine ferner umfasst:
Bildverarbeitungsmittel (100), die anhand des Bildsignals von jedem Bearbeitungsobjekt (201), das durch den Bilderfassungskopf (10) erfasst worden ist, Positionsinformationen jedes Bearbeitungsobjekts (201) mit einer ersten Position auf der optischen Achse (604) des Bilderfassungskopfes (10) als Referenz erfassen, die erfassten Positionsinformationen jedes Bearbeitungsobjekts (201) mit der ersten Position auf der optischen Achse (604) als Referenz in Positionsinformationen jedes Bearbeitungsobjekts (201) mit einer zweiten Position einer optischen Achse der Laserbearbeitung als Referenz umsetzen und Ablenkungssteuerdaten erhalten.

2. Laserstrahlmaschine nach Anspruch 1, die ferner eine Hauptsteuereinheit (110) umfasst, die dann, wenn der Laserbearbeitungskopf (20) eine Laserbearbeitung ausführt, die Koordinatendaten der mehreren an dem Werkstück (200) angeordneten Bearbeitungsobjekte (201), die zu den NC-Daten werden, in mehrere Bearbeitungsbereiche (202) unterteilt und eine Steuerung in der Weise ausführt, dass sich die XY-Bühne (32) zwischen den aufgeteilten Bearbeitungsbereichen (202) bewegt, und in der Weise, dass die Bearbeitungsobjekte (201) in jedem aufgeteilten Bearbeitungsbereich (202) jeweils mit einem Laserstrahl beleuchtet werden, der anhand der Ablenkungssteuerdaten abgelenkt wird.

3. Laserstrahlmaschine nach Anspruch 1, die ferner eine Hauptsteuereinheit umfasst, die dann, wenn der Laserbearbeitungskopf (20) eine Laserbearbeitung ausführt, die Koordinatendaten der mehreren an dem Werkstück (200) angeordneten Bearbeitungsobjekte (201), die zu den NC-Daten werden, in mehrere Bearbeitungsbereiche (202) aufteilt und eine Steuerung in der Weise ausführt, dass sich die XY-Bühne (32) zwischen den aufgeteilten Bearbeitungsbereichen (202) bewegt, und in der Weise, dass die Bearbeitungsobjekte (201) in jedem aufgeteilten Bearbeitungsbereich (202) mit einem Laserstrahl beleuchtet werden, der anhand der Ablenkungssteuerdaten abgelenkt wird.

4. Laserstrahlmaschine nach Anspruch 1 oder 2, wobei die Hauptsteuereinheit (110) eine Steuerung in der Weise ausführt, dass die mehreren Bearbeitungsobjekte (201) in jedem aufgeteilten Bearbeitungsbereich (202) jeweils mit einem Laserstrahl bestrahlt werden, der auf dem kürzesten Weg in Übereinstimmung mit mehreren Mengen der Ablenkungssteuerdaten abgelenkt wird.

5. Laserstrahlmaschine nach Anspruch 1 oder 3, wobei die Hauptsteuereinheit (101) eine Steuerung in der Weise ausführt, dass die mehreren Bearbeitungsobjekte (201) in jedem aufgeteilten Bearbeitungsbereich (202) jeweils mit einem Laserstrahl bestrahlt werden, der auf dem kürzesten Weg in Übereinstimmung mit mehreren Mengen der Ablenkungssteuerdaten abgelenkt wird.

6. Laserstrahlmaschine nach einem der Ansprüche 1-5, wobei die Bildverarbeitungsmittel (100) so konstruiert sind, dass die Positionsinformationen jedes erfassten Bearbeitungsobjekts (201) Informationen über eine planare Richtung des Bearbeitungsobjekts (201), Informationen über sein Vorhandensein/Fehlen und Fehlerinformationen hierüber enthalten.

7. Laserstrahlmaschine nach einem der Ansprüche 1-6, wobei die Bildverarbeitungsmittel (100) dazu ausgelegt sind, die Positionsinformationen des Bearbeitungsobjekts (201) in Übereinstimmung mit X-Richtungs- und Y-Richtungs-Projektionsverteilungen von Graustufendaten jedes Bearbeitungsobjekts (201), die anhand des durch den Bilderfassungskopf (10) erfassten Bildsignals jedes Bearbeitungsobjekts erzeugt werden, zu erfassen.

8. Laserstrahlmaschine nach einem der Ansprüche 4-7, wobei das optische Schrägbeleuchtungssystem (17) des Bilderfassungskopfes (10) in der Weise konstruiert ist, dass ein Auftreffwinkel (Θ) des Schrägbeleuchtungslichts (171) zum Beleuchten jedes der Bearbeitungsobjekte (201) in einem Bereich von 50° bis 70° in Bezug auf eine vertikale optische Achse (604) des Bilderfassungskopfes (10) liegt.

9. Laserstrahlmaschine nach einem der Ansprüche 1-7, wobei das optische Schrägbeleuchtungssystem (17) des Bilderfassungskopfes (10) in der Weise konstruiert ist, dass ein Auftreffwinkel (Θ) des Schrägbeleuchtungslichts (171) für die Beleuchtung jedes der Bearbeitungsobjekte (201) in einem Bereich von 50° bis 70° in Bezug auf eine vertikale optische Achse (604) des Bilderfassungskopfes (10) liegt.

10. Laserbearbeitungsverfahren, das umfasst:
einen Bilderfassungsschritt, der einen Bewegungsschritt zum Bewegen einer XY-Bühne (32), auf der ein Werkstück (200) liegt, an dem mehrere zu bearbeitende Objekte (201) angeordnet sind, in XY-Richtungen in Übereinstimmungen mit NC-Daten, einen Beleuchtungsschritt zum Beleuchten jedes der Bearbeitungsobjekte (201), die an dem sich bewegenden Werkstück (200) angeordnet sind, durch ein optisches Beleuchtungssystem (17) und einen Empfangs- und Umsetzungsschritt zum Empfangen von Licht, das von dem beleuchteten Bearbeitungsobjekt (201) gestreut und reflektiert wird, und zum Umsetzen des Lichts in eine Bildsignalform, um **dadurch** Bildsignale von jedem der Bearbeitungsobjekte (201) an dem Werkstück (200) durch ein optisches Erfassungssystem in einem Bilderfassungskopf (10), der in einer Bilderfassungsstation vorgesehen ist, zu erfassen, enthält; und
einen Laserbearbeitungsschritt, der einen Bewegungsschritt zum Bewegen einer XY-Bühne (32) mit dem darauf liegenden Werkstück (200) in XY-Richtungen in Übereinstimmung mit NC-Daten, einen Ablenkungsschritt zum Ablenken eines von einer Laserlichtquelle (21) ausgesendeten Laserstrahls in den XY-Richtungen über eine XY-Lichtstrahlablenkeinrichtung (22) in Übereinstimmung mit Ablenkungssteuerdaten, die in dem Bilderfassungsschritt erhalten werden, und einen Auftreffschritt zum Auftreffenlassen des abgelenkten Laserstrahls auf jedes Bearbeitungsobjekt (201), die an dem sich bewegenden Werkstück (200) angeordnet sind, aus einer im Wesentlichen senkrechten Richtung über eine Bestrahlungslinse (23), um **dadurch** jedes Bearbeitungsobjekt (201) in dem Laserbearbeitungskopf (20), der in einer benachbart zu der Bilderfassungsstation angeordneten Laserbearbeitungsstation vorgesehen ist, zu bearbeiten, enthält,
**dadurch gekennzeichnet, dass** der Beleuchtungsschritt durch schräges Beleuchten der Bearbeitungsobjekte (201) durch ein optisches Schrägbeleuchtungssystem (17) erzielt wird, und dass ein weiterer Bildverarbeitungsschritt vorgesehen ist, der einen Erfassungsschritt, um in Übereinstimmung mit den Bildsignalen von jedem Bearbeitungsobjekt (201), die in dem Bilderfassungsschritt erfasst werden, Positionsinformationen jedes Bearbeitungsobjekts (201) mit einer ersten Position auf der optischen Achse (604) des Bilderfassungskopfes (10) als eine Referenz zu erfassen, und ein Umsetzungsschritt, um die erfassten Positionsinformationen jedes Bearbeitungsobjekts (201) mit der ersten Position auf der optischen Achse (604) als eine Referenz in Positionsinformationen jedes Bearbeitungsobjekts (201) mit einer zweiten Position der optischen Achse eines Laserbearbeitungskopfes (20) als Referenz umzusetzen, um **dadurch** Ablenkungssteuerdaten zu erhalten, enthält.

11. Laserbearbeitungsverfahren nach Anspruch 10, wobei der Laserbearbeitungsschritt ferner einen Steuerschritt enthält, in dem die Koordinatendaten der mehreren an dem Werkstück (200) angeordneten Bearbeitungsobjekte (201), die zu den NC-Daten werden, in mehrere Bearbeitungsbereiche (202) aufgeteilt werden, und die Steuerung in der Weise ausgeführt wird, dass sich die XY-Bühne (32) zwischen den aufgeteilten Bearbeitungsbereichen (202) bewegt, und in der Weise, dass die Bearbeitungsobjekte (201) in jedem aufgeteilten Bearbeitungsbereich (202) jeweils mit einem Laserstrahl bestrahlt werden, der anhand der Ablenkungssteuerdaten abgelenkt wird.

12. Laserbearbeitungsverfahren nach Anspruch 10, wobei der Laserbearbeitungsschritt ferner einen Steuerschritt enthält, in dem die Koordinatendaten der mehreren an dem Werkstück (200) angeordneten Bearbeitungsobjekte (201), die zu den NC-Daten werden, in mehrere Bearbeitungsbereiche (202) aufgeteilt werden, und die Steuerung in der Weise ausgeführt wird, dass sich die XY-Bühne (32) zwischen den aufgeteilten Bearbeitungsbereichen (202) bewegt, und in der Weise, dass die Bearbeitungsobjekte (201) in jedem aufgeteilten Bearbeitungsbereich (202) mit einem Laserstrahl bestrahlt werden, der anhand der Ablenkungssteuerdaten abgelenkt wird.

13. Laserbearbeitungsverfahren nach Anspruch 10 oder 11, wobei der Steuerschritt einen Steuerschritt des kürzesten Weges enthält, bei dem die Steuerung in der Weise ausgeführt wird, dass die mehreren Bearbeitungsobjekte (201) in jedem aufgeteilten Bearbeitungsbereich (202) mit einem Laserstrahl bestrahlt werden, der auf dem kürzesten Weg in Übereinstimmung mit mehreren Mengen der Ablenkungssteuerdaten abgelenkt wird.

14. Laserbearbeitungsverfahren nach Anspruch 11 oder 12, wobei der Steuerschritt einen Steuerschritt des kürzesten Wegs enthält, bei dem die Steuerung in der Weise ausgeführt wird, dass die mehreren Bearbeitungsobjekte (201) in jedem aufgeteilten Bearbeitungsbereich (202) mit einem Laserstrahl bestrahlt werden, der auf dem kürzesten Weg in Übereinstimmung mit mehreren Mengen der Ablenkungssteuerdaten abgelenkt wird.

15. Laserbearbeitungsverfahren nach einem der Ansprüche 10-14, wobei in dem Bildverarbeitungsschritt die erfassten Positionsinformationen der Bearbeitungsobjekte (201) Informationen über eine planare Richtung jedes Bearbeitungsobjekts, Informationen über sein Vorhandensein/Fehlen und Fehlerinformationen hierüber enthalten.

16. Laserbearbeitungsverfahren nach einem der Ansprüche 10-15, wobei in dem Bildverarbeitungsschritt die Positionsinformationen jedes Bearbeitungsobjekts (201) in Übereinstimmung mit X-Richtungs- und Y-Richtungs-Projektionsverteilungen von Graustufendaten jedes Bearbeitungsobjekts (201) erfasst werden, die aus dem in dem Bilderfassungsschritt erfassten Bearbeitungsobjekt-Bildsignal erzeugt werden.

17. Laserbearbeitungsverfahren nach einem der Ansprüche 11-16, wobei während der Schrägbeleuchtung in dem Bildverarbeitungsschritt ein Auftreffwinkel (Θ) des Schrägbeleuchtungslichts (171) zum Beleuchten jedes der Bearbeitungsobjekte (201) in einem Bereich von 50° bis 70° in Bezug auf eine vertikale optische Achse (604) liegt.

18. Laserbearbeitungsverfahren nach einem der Ansprüche 10-16, wobei während der Schrägbeleuchtung in dem Bildverarbeitungsschritt ein Auftreffwinkel (Θ) des Schrägbeleuchtungslichts (171) zum Beleuchten jedes der Bearbeitungsobjekte (201) in einem Bereich von 50° bis 70° in Bezug auf eine vertikale optische Achse (604) liegt.

## Revendications

1. Dispositif à faisceau laser, comprenant :
un étage XY (32) pour qu'une pièce à usiner (200) puisse reposer dessus, sur lequel de multiples objets (201) à usiner sont disposés, dans lequel l'étage XY (32) déplace la pièce à usiner (200) dans le sens XY conformément aux données NC ;
une station d'acquisition d'image comprenant une tête d'acquisition d'image (10) convertissant la lumière en un signal d'image, et où la tête d'acquisition d'image (10) inclut le signal d'image venant de chaque objet à usiner (201) ; et
une tête d'usinage laser (20) qui est prévue dans une station d'usinage laser, disposée près de la station d'acquisition d'image, où la tête d'usinage laser (20) comprend une source de lumière laser (21) pour émettre un faisceau laser, un déflecteur de faisceau optique XY (22) pour dévier un faisceau laser émis par la source de lumière laser (21) dans la direction XY selon les données de contrôle de la déflection obtenues depuis le moyen de traitement d'image (100), et une lentille d'irradiation (23) pour admettre, depuis une direction sensiblement perpendiculaire à chaque objet à usiner (201), le faisceau laser dévié par le déflecteur de faisceau optique XY (22) et où la tête d'usinage laser (20) irradie chaque objet d'usinage (201) avec le faisceau laser venant de la lentille d'irradiation (23) et usine l'objet à usiner (201),
**caractérisé en ce que** la tête d'acquisition d'image (10) comprend un système optique d'illumination oblique (17) pour illuminer en position oblique chacun des objets à usiner (201) disposé sur la pièce à usiner (200) déplacée par l'étage XY (32), et le système optique de détection (601, 13) pour recevoir la lumière diffusée et réfléchie depuis chaque objet à usiner (201) illuminé en position oblique par le système optique d'illumination oblique (17),
un moyen de traitement d'image (100), qui, sur la base du signal d'image émanant de chaque objet à usiner (201) qui a été acquis par la tête d'acquisition d'image (10), détecte l'information de position de chaque objet à usiner (201) avec une première position d'axe optique (604) de la tête d'acquisition d'image (10) comme référence, convertit l'information de position détectée de chaque objet à usiner (201) avec la première position d'axe optique (604) d'une référence en une information de position de chaque objet à usiner (201) avec une deuxième position d'axe optique d'usinage laser comme référence, et obtient des données de contrôle de la déflection.

2. Le dispositif à faisceau laser selon la revendication 1, comprenant en outre un contrôleur principal (110) qui, quand la tête d'usinage laser (20) exécute l'usinage laser, divise en une pluralité de régions d'usinage (202) les coordonnées de la pluralité d'objets à usiner (201) disposés sur la pièce à usiner (200) qui deviennent les données NC, et réalise le contrôle de sorte que l'étage XY (32) se déplace entre les régions d'usinage divisées (202) et de sorte que les objets à usiner (201) à l'intérieur de chaque région d'usinage divisée (202) sont chacun irradiés avec un faisceau laser dévié sur la base des données de contrôle de la déflection.

3. Le dispositif à faisceau laser selon la revendication 1, comprenant en outre un contrôleur principal qui, quand la tête d'usinage laser (20) exécute l'usinage laser, divise en une pluralité de régions d'usinage (202) les coordonnées de la pluralité d'objets à usiner (201) disposés sur la pièce à usiner (200) qui deviennent les données NC, et réalise le contrôle de sorte que l'étage XY (32) se déplace entre les régions d'usinage divisées (202) et de sorte que les objets à usiner (201) à l'intérieur de chaque région d'usinage divisée (202) sont chacun irradiés avec un faisceau laser dévié sur la base des données de contrôle de la déflection.

4. Le dispositif à faisceau laser selon la revendication 1 ou 2, dans lequel le contrôleur principal (110) réalise le contrôle de sorte que les multiples objets à usiner (201) à l'intérieur de chaque région d'usinage divisée (202) sont chacun irradiés avec un faisceau laser dévié par le plus court chemin conformément à plusieurs ensembles de données de contrôle de la déflection.

5. Le dispositif à faisceau laser selon la revendication 1 ou 3, dans lequel le contrôleur principal (110) réalise le contrôle de sorte que les multiples objets à usiner (201) à l'intérieur de chaque région d'usinage divisée (202) sont chacun irradiés avec un faisceau laser dévié par le plus court chemin conformément à plusieurs ensembles de données de contrôle de la déflection.

6. Le dispositif à faisceau laser selon l'une des revendications 1 à 5, dans lequel le moyen de traitement d'image (100) est conçu de sorte que l'information de position de chaque objet à usiner (201) détectée comprend l'information concernant une direction plane de l'objet à usiner (201), l'information concernant sa présence/son absence et l'information de défaut de celle-ci.

7. Le dispositif à faisceau laser selon l'une des revendications 1 à 6, dans lequel le moyen de traitement d'image (100) est adapté à détecter l'information de position de chaque objet à usiner (201) conformément à des distributions de projection dans la direction X et dans la direction Y des données de niveaux de gris de chaque objet à usiner (201), créées sur la base du signal d'image de chaque objet à usiner acquis par la tête d'acquisition d'image (10).

8. Le dispositif à faisceau laser selon l'une des revendications 4 à 7, dans lequel le système optique d'illumination oblique (17) de la tête d'acquisition d'image (10) est conçu de sorte qu'un angle d'incidence (Θ) de la lumière d'illumination oblique (171) pour illuminer chacun des objets à usiner (201) soit un angle de 50° à 70° par rapport à un axe optique vertical (604) de la tête d'acquisition d'image (10).

9. Le dispositif à faisceau laser selon l'une des revendications 1 à 7, dans lequel le système optique d'illumination oblique (17) de la tête d'acquisition d'image (10) est conçu de sorte qu'un angle d'incidence (Θ) de la lumière d'illumination oblique (171) pour illuminer chacun des objets à usiner (201) soit un angle de 50° à 70° par rapport à un axe optique vertical (604) de la tête d'acquisition d'image (10).

10. Procédé d'usinage laser, comprenant :
une étape d'acquisition d'image incluant une étape de mouvement consistant à déplacer, dans les directions XY conformément aux données NC, un étage XY (32) pour faire reposer sur celui-ci une pièce à usiner (200), dans lequel de multiples objets (201) à usiner sont disposés, une étape d'illumination consistant à illuminer chacun des objets à usiner (201) disposés sur la pièce à usiner (200) en mouvement par un système optique d'illumination (17), et une étape de réception et de conversion consistant à recevoir la lumière diffusée et réfléchie par l'objet à usiner illuminé (201) et à convertir la lumière en une forme de signal d'image pour ainsi acquérir des signaux d'image émanant de chacun des objets à usiner (201) sur la pièce à usiner (200) par un système optique de détection dans une tête d'acquisition d'image (10) qui est prévue dans une station d'acquisition d'image ; et
une étape d'usinage laser incluant une étape de mouvement consistant à déplacer, dans les directions XY conformément aux données NC, un étage XY (32) avec la pièce à usiner (200) reposant sur celui-ci, une étape de déflection consistant à dévier un faisceau laser émis par une source de lumière laser (21), dans les directions XY par le biais d'un déflecteur de faisceau optique XY (22), conformément aux données de contrôle de déflection obtenues dans l'étape d'acquisition d'image, et une étape d'admission consistant à admettre le faisceau laser dévié dans un objet à usiner (201) disposé sur la pièce à usiner en mouvement (200) par rapport à une direction sensiblement perpendiculaire par le biais d'une lentille d'irradiation (23) pour ainsi usiner chaque objet à usiner (201) dans la tête d'usinage laser (20), qui est prévue dans une station d'usinage laser disposée près de la station d'acquisition d'image,
**caractérisé en ce que** l'étape d'illumination est réalisée par l'illumination en position oblique des objets à usiner (201) par un système optique d'illumination oblique (17) et
**caractérisé par** l'étape supplémentaire de traitement d'image comprenant une étape de détection, conformément aux signaux d'image venant de chaque objet à usiner (201) acquis dans l'étape d'acquisition d'image, consistant à détecter l'information de position de chaque objet à usiner (201) avec une première position d'axe optique (604) de la tête d'acquisition d'image (10) comme référence, et une étape de conversion consistant à convertir l'information de position détectée de chaque objet à usiner (201) avec la première position d'axe optique (604) comme référence en une information de position de chaque objet à usiner (201) avec une deuxième position de l'axe optique d'une tête d'usinage laser (20) comme référence pour ainsi obtenir des données de contrôle de la déflection.

11. Le procédé d'usinage laser selon la revendication 10, dans lequel l'étape d'usinage laser comprend en outre une étape de contrôle dans laquelle les coordonnées des multiples objets à usiner (201) disposés sur la pièce à usiner (200) qui deviennent les données NC sont divisées en une pluralité de régions d'usinage (202) et le contrôle est réalisé de sorte que l'étage XY (32) se déplace entre les régions d'usinage divisées (202) et de sorte que les objets à usiner (201) à l'intérieur de chaque région d'usinage divisée (202) sont chacun irradiés avec un faisceau laser dévié sur la base des données de contrôle de la déflection.

12. Le procédé d'usinage laser selon la revendication 10, dans lequel l'étape d'usinage laser comprend en outre une étape de contrôle dans laquelle les coordonnées des multiples objets à usiner (201) disposés sur la pièce à usiner (200) qui deviennent les données NC sont divisées en une pluralité de régions d'usinage (202) et le contrôle est réalisé de sorte que l'étage XY (32) se déplace entre les régions d'usinage divisées (202) et de sorte que les objets à usiner (201) à l'intérieur de chaque région d'usinage divisée (202) sont chacun irradiés avec un faisceau laser dévié sur la base des données de contrôle de la déflection.

13. Le procédé d'usinage laser selon la revendication 10 ou 11, dans lequel l'étape de contrôle comprend une étape de contrôle par le chemin le plus court consistant à réaliser un contrôle de sorte que les multiples objets à usiner (201) à l'intérieur de chaque région d'usinage divisée (202) sont chacun irradiés avec un faisceau laser dévié par le chemin le plus court conformément à plusieurs ensembles de données de contrôle de déflection.

14. Le procédé d'usinage laser selon la revendication 11 ou 12, dans lequel l'étape de contrôle comprend une étape de contrôle par le chemin le plus court consistant à réaliser un contrôle de sorte que les multiples objets à usiner (201) à l'intérieur de chaque région d'usinage divisée (202) sont chacun irradiés avec un faisceau laser dévié par le chemin le plus court conformément à plusieurs ensembles de données de contrôle de déflection.

15. Le procédé d'usinage laser selon l'une des revendications 10 à 14, dans lequel, dans l'étape de traitement d'image, l'information de position des objets à usiner (201) détectée comprend l'information concernant une direction plane de l'objet à usiner, l'information concernant sa présence/son absence et l'information de défaut de celle-ci.

16. Le procédé d'usinage laser selon l'une des revendications 10 à 15, dans lequel, dans l'étape de traitement d'image, l'information de position de chaque objet à usiner (201) est détectée conformément à des distributions de projection dans la direction X et dans la direction Y des données de niveaux de gris de chaque objet à usiner (201), créées à partir du signal d'image de l'objet à usiner acquis dans l'étape d'acquisition d'image.

17. Le procédé d'usinage laser selon l'une des revendications 11 à 16, dans lequel, au cours de l'illumination oblique dans l'étape de traitement d'image, un angle d'incidence (Θ) de la lumière d'illumination oblique (171) pour illuminer chacun des objets à usiner (201) est un angle de 50° à 70° par rapport à un axe optique vertical (604).

18. Le procédé d'usinage laser selon l'une des revendications 10 à 16, dans lequel, au cours de l'illumination oblique dans l'étape de traitement d'image, un angle d'incidence (Θ) de la lumière d'illumination oblique (171) pour illuminer chacun des objets à usiner (201) est un angle de 50° à 70° par rapport à un axe optique vertical (604).
